# EUROPEAN PATENT SPECIFICATION

(11) **EP 2 074 339 B1**
(45) Date of publication and mention of the grant of the patent: **31.03.2010**
(21) Application number: 06806061.5
(22) Date of filing: 05.10.2006
(51) Int. Cl.: F16H 57/08, F16H 1/30

(54) **METHOD FOR PRODUCING A DIFFERENTIAL AND DIFFERENTIAL**
VERFAHREN ZUR HERSTELLUNG EINES DIFFERENTIALS UND DIFFERENTIAL
PROCÉDÉ POUR PRODUIRE UN DIFFÉRENTIEL ET DIFFÉRENTIEL

(43) Date of publication of application: 01.07.2009
(73) Proprietor: Aktiebolaget SKF, 415 50 Göteborg (SE)
(72) Inventor: KAPAAN, Hendrikus, Jan, NL-3435 DM Nieuwegein (NL); ZWARTS, Jacobus, NL-3438 VA Nieuwegein (NL); VISSER, Cornelius Petrus Antonius, NL-5275 BT Den Dungen (NL)
(74) Representative: Gosdin, Michael
(86) International application number: PCT/EP2006/009652
(87) International publication number: WO 2008/040375

(56) References cited:
- EP-A- 0 683 333
- EP-A- 0 979 959
- WO-A-2004/053357
- FR-A- 2 438 773
- GB-A- 1 252 520
- US-A- 5 157 966
- US-A1- 2004 149 078
- US-B1- 6 692 398

## Description

### Technical Field

The invention relates to a method for producing a differential, especially for a driven vehicle, specifically for a front or rear driven car or truck, wherein the differential has a housing element, in which a bevel gear is mountable inside a middle region of the housing element. Furthermore, the invention relates to a differential. The method according to the preamble of claim 1 and the differential according to the preamble of claim 10 are generally known.

### Background

A differential (differential gear) is well known in the field of vehicle drives. The differential has a housing element in which a bevel gear (consisting of satellite bevel gears and side bevel gears) is mounted. The housing is driven by drive means, often by a crown gear (drive gear). The bevel gears inside the housing element allow a speed compensation movement between inner and outer driven wheels when e. g. driving a curve with the vehicle.

An example for the structural design of a differential is shown in WO 2004/053357 A1. Here the housing element for the differential is made of two housing parts which are welded together. One of the parts, a first housing part, has a first section with a small diameter where a second section abuts which has a larger diameter for mounting and locking the bevel gears. A second housing, the differential locking part, has a flange-like shape with a tube like axial end for the bearing support. This flange-like section is welded with the first housing part. In EP 0 683 333 A1 the housing for a differential is also formed by two parts which are connected. Inside the housing a bevel gear is arranged which is placed in a cage element. US 6,692,398 B1 shows another differential. Here, the housing element of the differential consists of a tube in which the bevel gear is mounted. The diameter of the tube is determined by the necessary space for the bevel gear.

Other solutions are known by which a containing housing (containing chamber) for the bevel gears is created in a housing element. This can be done by a mechanical machining process, e. g. by turning the seatings for the bevel gears and bearings. It is also possible to employ a cast housing element to get the optimal shape for the housing element.

Consequently, the differential design will determine whether the production and assembly procedures of its housing and components are expensive or not and whether the design is suitable for the mounting of the drive gear with or without a power assist device, e. g. an electrical motor or generator.

### Summary of the invention

According to the invention a design and method for producing a differential is suggested by which the differential and especially its housing element can be produced in a cost efficient manner and is suitable for mounting the drive gear and a power assist device. Furthermore, the differential has a sufficient stiffness at a reduced overall weight.

Therefore, it is an object of the invention to supply a design and a method for producing a differential which can be produced in an inexpensive way, wherein the housing element of the differential should have a sufficient stiffness at a reduced overall weight.

These and other advantages are obtained according to the invention by a method which is characterized in that the housing element of the differential gear is produced from a one piece tube section, wherein the middle region or section of the tube section is radially widened or expanded by plastic deformation. The plastic deformation process is preferably a hydro-forming process or a mechanical process. In the case of a mechanical process a tool, especially a roller, can be employed which is pressed radially against an inner surface of the tube section to expand it.

As will become apparent in detail later, this design makes it possible to manufacture the differential in a very cost efficient manner, obtaining a sufficient stiff design of the housing element.

This is especially the case when the deformed middle region of the tube section or the housing element respectively is provided with a spherical shape to center the satellite bevel gears.

After or before the plastic deformation of this middle region takes place one or two openings, indentations or slots can be machined, e. g. punched out, in preferably opposed parts of the radially widened region. Those openings can serve to receive a (guide and drive) pin for fixing a further machine part, to mount the bevel gear or to pass through an oil lubricant.

Furthermore, after or before the plastic deformation of the middle region or section takes place a plurality of openings can be machined, e. g. punched out, in an adjacent region of the radially widened region, wherein the openings are uniformly distributed around the circumference of the housing element. Those openings can serve as pulse counter for an encoder speed sensor.

After or before plastic deformation of the middle region a plurality of e. g. lip shaped indentations or dimples/contours can be machined, e. g. punched, in the adjacent region, wherein the indentations or lips / dimples can be cold-formed inwards for permanently fixing the bevel side gear supports. This axial fixation of the differential side gears can be done with one or more indentations or lips into the outer surface of the housing element.

Preferably, the initial tube section has a substantial constant diameter along its entire axial length. The diameter of the tube section preferably varies at a maximum of 10 % between both axial ends of the tube section.

The housing element has preferably a first diameter at a first end, an outwards directed material expansion in the middle region or section and a second diameter at a second end, wherein the first and the second diameter are at least substantially equal. This is to be understood in the meaning of usual manufacturing tolerances.

The differential according to the invention has a housing element, wherein bevel gears are mounted inside a middle region or section of the housing element, wherein the housing element is supported by a bearing arrangement relatively to a carrier structure (housing). The invention is characterized in that the housing element consists of a tube section which is radially widened in the middle region or section by plastic deformation, wherein the widened middle region or section forms a containing chamber for the bevel gear. The outer shape of the middle region or section can be e. g. spherical or cylindrical. The spherical shape ensures a good centering of the bevel gears.

The plastic deformation of a ferrous or non-ferrous tube material is preferably carried out by hydro-forming or by mechanical forming.

The radially widened region / section of the housing element has preferably a spherical shape. The housing element can be made of a sheet metal tube. The tube can have a constant diameter along its entire axial length before carrying out the plastic deforming process. The housing element can further have a first diameter at a first end, an expansion in the middle region and a second diameter at a second end, wherein the first and the second diameter are at least substantial equal, especially in the meaning of usual manufacturing tolerances.

The bearing arrangement at both ends of the housing element can have e. g. two bearings arranged in the axial end regions of the housing element.

The bearing can be a ball or roller bearing or a combination of these. Also at one end of the housing element a pre-loaded bearing unit can be located with a supporting bearing at the opposite end. The bearing can be oil lubricated or grease lubricated in a sealed configuration. Sensors can be integrated in the bearings or can be used as an add-on device to monitor e. g. the speed, the load and the temperature.

A drive gear, e. g. a drive bevel gear for a right angle transmission with a pinion gear or a helical or spur gear in combination with a parallel drive gear, can be fixed at the housing element. The drive gear can have a spherical part which is congruent with the spherical shape of the housing element. The fixation of the drive gear at the housing element can be established by means of a pin which fits in the housing element and at least one of the gear wheels of the bevel gear.

The drive gear fitted on the housing element can be made as a one-piece part. Alternatively, it can be made of two parts, namely of a hardened gear wheel and a hub element. The gear wheel and the hub element can be mechanically connected e. g. by rivets or bolts. The hub element can consist of a ferrous or non-ferrous casting, e. g. of aluminum or magnesium or cast iron.

The housing element can have a plurality of openings which are located in an adjacent region of the radially widened region or section, wherein the openings are uniformly distributed around the circumference of the housing element for exciting a sensor element.

Alternatively, a plurality of indentations or dimples can be arranged which are located in the adjacent region. Also it is possible as a further alternative that the housing element has a plurality of magnetic elements which are located in the adjacent region, wherein the magnetic elements are uniformly distributed around the circumference of the housing element.

A sensor element can be fixed on the stationary or rotatably housing element and/or at the carrier structure adjacent to the openings, to the indentations/dimples or to the magnetic elements. A preferred embodiment of the sensor is a hall effect sensor.

The bearing arrangement can consist of two taper roller bearings with rotating outer rings which are arranged in the axial end regions / ends of the housing element. The taper roller bearings can be arranged in an O-configuration. A rotating inner ring bearing configuration has mostly an X-configuration.

The stationary bearing rings are fixed in the axle differential or gear box carrier structure.

The carrier structure is often a gearbox housing or a drive axle differential housing made of a cast ferrous or non-ferrous material, e. g. cast iron of aluminum.

The differential can have a sealing element to seal the gears and bearings against the dirt from the inside (e. g. contaminated lubrication oil) and from the outside (e. g. dirt and water). The containing chamber can be at least partially filled with a lubricant, which can be generally grease or oil.

Also, the housing can be mechanically connected to a power assist device, which can be e. g. of the hydraulic/mechanical or of the electrical/mechanical type or a combination of these. Specifically, this power assist device can be an electric motor and/or generator to function as an extra power assist while driving the vehicle from a stand-still position. Such devices are beneficial and used in hydride driven vehicles.

The suggested differential design according to the invention offers the following advantages:
- The weight of the differential housing element can be reduced due to the optimum employment of a ferrous or non-ferrous tube material.
- The obtained housing element - made e. g. by the hydro-forming process or by a mechanical process - provides sufficient stiffness for a stable pre-loading of the bearing arrangement and consequently maintains the proper gear mesh for the drive gear end driven gear (e. g. pinion gear).
- The assembly procedure results into a cost effective modular differential concept, which eases the in-line application assembly.
- Sensor options / functions can be adopted in a relative simple way.
- The modular differential concept allows for adaptation of different gear ratios of the drive and driven gears.
- The overall differential energy consumption and the noise level can be reduced.
- The total system costs can be reduced.

Further preferred embodiments of the invention are defined below and in the claims.

### Brief description of the drawings

The drawings show embodiments of the differential arrangement according to the invention.
- Fig. 1: shows a cross sectional view through a tube section from which a housing element for a differential is made, in a not yet deformed state,
- Fig. 2: shows a cross sectional view through a housing element of a differential made from the tube section according fig. 1,
- Fig. 3: shows the housing element during assembly of satellite bevel gears in a first state of mounting,
- Fig. 4: shows the housing element according to fig. 3 during the assembly of side bevel gears in a second state of mounting,
- Fig. 5: shows a perspective sectional view of the housing element according to fig. 4 with the fully assembled and locked bevel gears, followed by the assembly of the end bearings to form a modular differential concept,
- Fig. 6: shows the outside of the arrangement according fig. 5,
- Fig. 7: shows a cross sectional view of the differential with a one-piece drive gear mounted at the housing element according to a first embodiment of the invention, with an assembly guide pin replaced with the final drive pin,
- Fig. 8: shows the assembly as fig. 7 with a two-piece drive gear according to a second embodiment of the invention,
- Fig. 9: shows a cross sectional view of the differential mounted in the drive axle or gearbox housing and

- Fig. 10: shows the option to locate the rotating part of an extra power assist device on the housing element.

### Detailed description of the invention

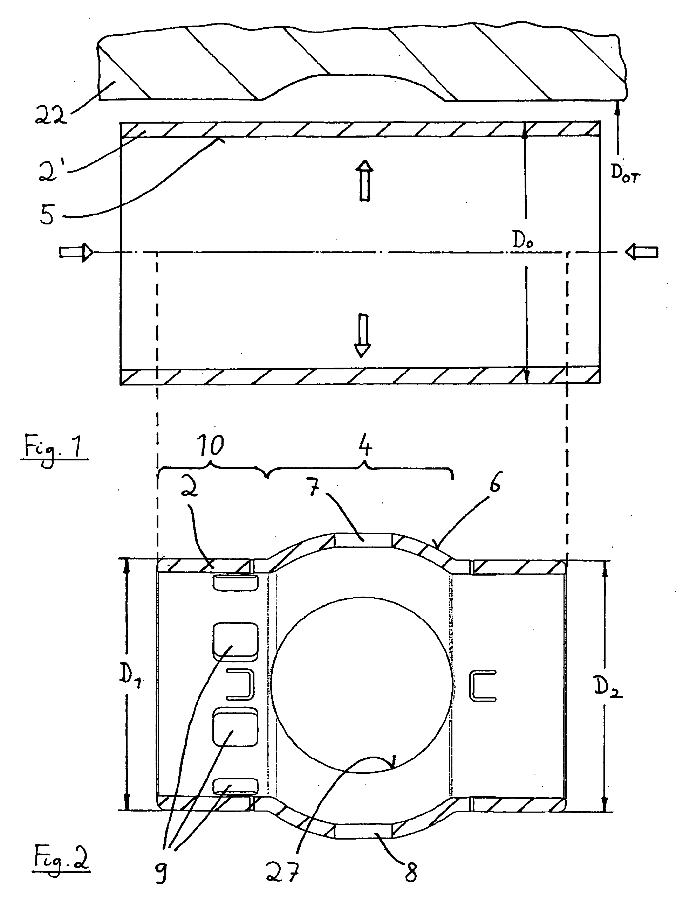

Fig. 1 shows a tube section 2' made of a tube in cross sectional view. The tube section 2' has a substantially constant outer diameter D₀ and a substantially constant wall thickness along its axial extension. From the tube section 2' a housing element 2 is formed as depicted in fig. 2.

The housing element 2 is made by plastic deforming the tube section 2' in a middle section 4. I. e. the tube section 2' remains basically undeformed in the adjacent regions 10 on both sides of the middle region 4. As can be seen the middle region 4 is enlarged in diameter and formed to a spherical shape 6. This is done e. g. by exerting an axial pressure to the tube section 2' as illustrated by the arrows in fig. 1. The tube section 2' is axially compressed and an inner pressure is exerted on the inner surface 5 of the tube section 2'. In fig. 1 a tool part 22 is shown which is a part of a hydro-forming device. By applying hydraulic pressure to the inner volume of the tube section 2' the material of the tube section 2' of the middle region 4 is pressed outwards until the outer surface of the tube section 2' get into contact with the cavity surface of the tool part 22. The diameter D_{0T} of the tool part 22 in the side regions is identical with the diameter D₀ of the tube section 2'. Thus, the outer circumference of the tube section 2' remains unchanged in the side regions during plastic deformation.

Consequently, the outer diameters D₁ and D₂ of the housing element 2 in the adjacent regions 10 remain unchanged compared with the outer diameter D₀ of the tube section 2'. However, the middle region 4 is expanded to a bigger diameter. So a containing chamber 15 is formed having a sufficient volume for receiving a bevel gear.

As can be seen, the housing element 2 is completely formed from a tube section 2', wherein the diameters D₁, D₂ of the housing element 2 in the adjacent regions 10 beside the expanded middle section 4 are equal - at least within the normal manufacturing tolerances.

Hydro-forming is a cost-effective way of shaping tube material into stiff and strong pieces. High pressure hydraulic pistons inject a fluid at very high pressure inside the workpiece which causes it to expand until it matches the shape of the mold.

After the middle region or middle section 4 has been produced by the hydro-forming process, openings 7 and 8 are machined, e. g. punched, into the housing element 2 for a purpose which will become apparent later. Furthermore, openings 9 can be machined, e. g. punched, which are uniformly distributed around the circumference of the adjacent region 10. Those openings 9 can be used for sensing the rotational speed of the housing element 2 by means of a sensor (not depicted).

Furthermore, big circular-shaped openings 27 can be machined, especially punched out, into the housing element 2 which reduce the weight of the housing element 2 and thus of the differential gear. Also, those openings 27 can be used to facilitate the process of mounting the bevel gear described later in the containing chamber 15. The depicted design is usually employed to be lubricated with oil. Consequently, oil can flow through the openings 27 and to the bevel gear. This design is commonly used in most vehicles.

It is also possible that neither the openings 9 nor the openings 27 are realized to thereby obtain a closed and sealed unit with a certain amount of grease in the inner of the containing chamber.

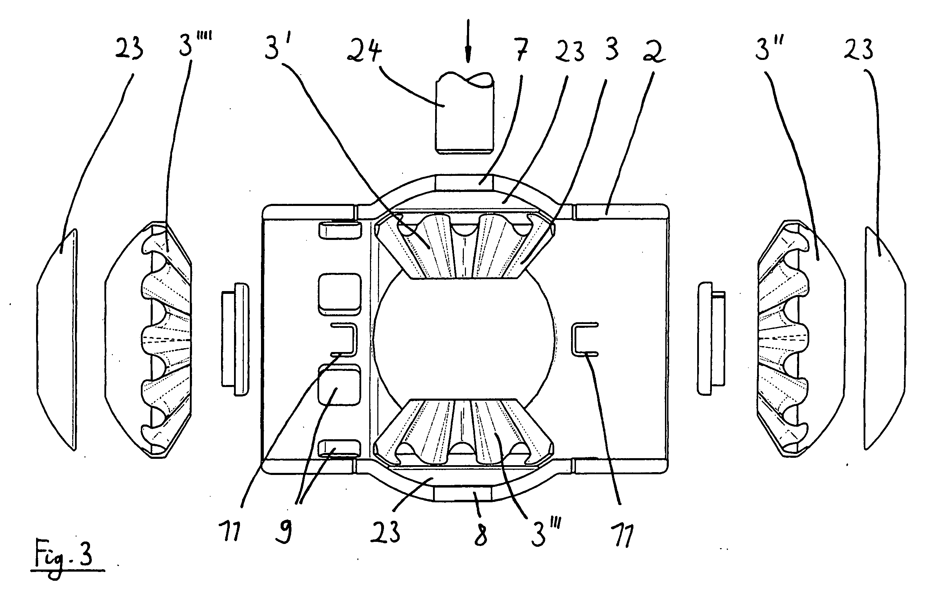

The mounting of the differential gear is shown in figures 3 till 9, where different stages of the mounting process are depicted.

In fig. 3 it can be seen that gear wheels 3', 3", 3"' and 3"" of a bevel gear 3 are mounted in the containing chamber 15 of the housing element 2. The gear wheels 3' is a satellite bevel gear. In a first state plain bearing elements 23 (which can consist of a plain bearing made of plastic or steel material) are located at the inner surface of the spherical middle region 4 of the housing element 2. Then, the satellite gears 3' and 3"' are placed in the shown position. A guide pin 24 (used for mounting only) is then pushed in the direction of the arrow through the housing element 2 through the openings 7 and 8, fixing the gears wheels 3'. 3"'. Then the side bevel gear wheels 3" and 3"" are inserted from the sides of the housing element 2. Also the side bevel gear wheels 3", 3"" are brought in contact with plain bearing elements 23.

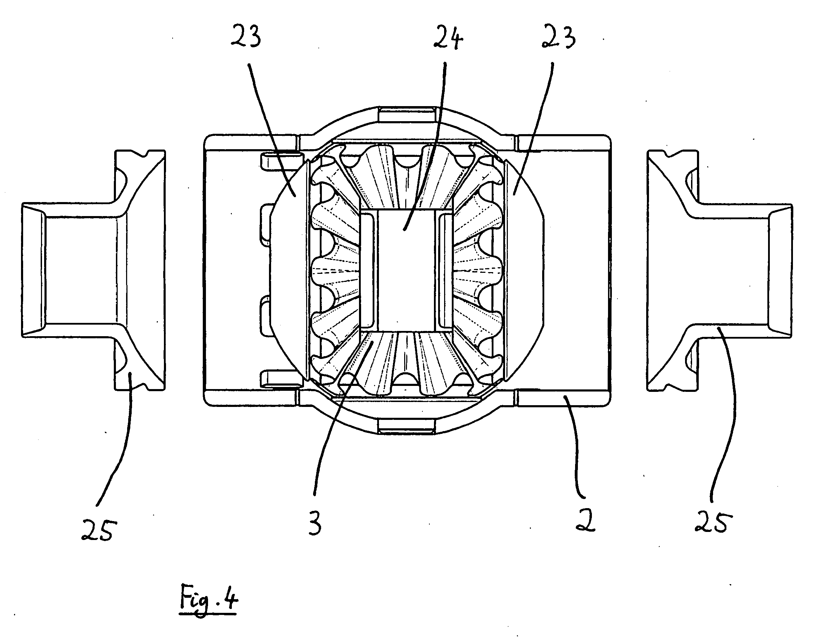

As can be seen in fig. 4, after the pre-assembly of the bevel gear 3, the axial support elements 25 for the side bevel gears are inserted in axial direction contacting the plain bearing elements 23.

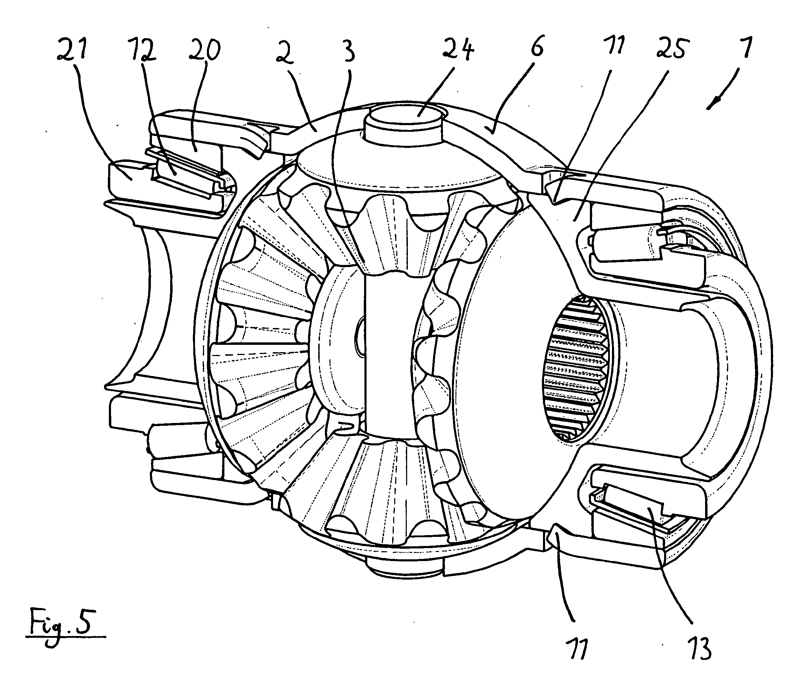

As can be seen in fig. 5 after the mounting of the axial support elements 25 for the side bevel gears these supports are axially locked in the housing element 2 by means of cold-forming the punched out lips 11 into a radial groove in the support. This can be done in that way that the desired axial play is maintained.

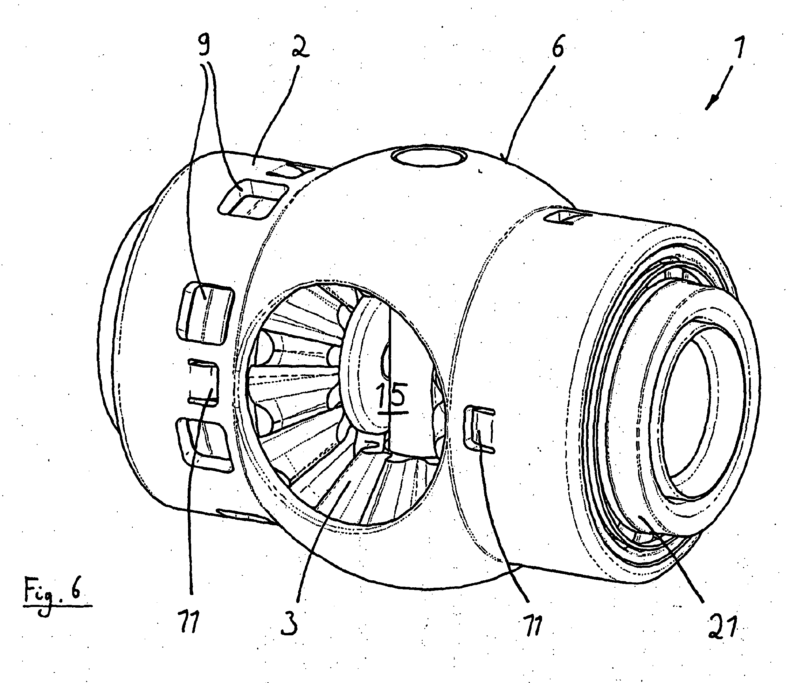

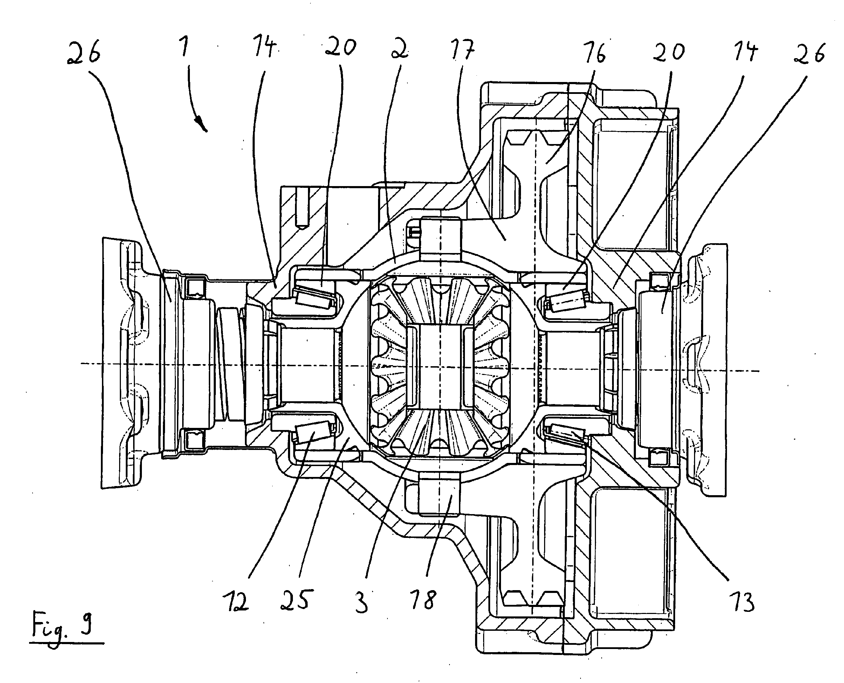

Two taper roller bearings 12 and 13 - forming a bearing arrangement 12, 13 - are mounted to get the device as shown in figures 5 and 6. While the outer rings 20 of the taper roller bearings 12, 13 are rotating together with the housing elements 2, the stationary inner rings 21 of the taper roller bearings 12, 13 are mounted into the carrier structure 14 (see fig. 9). The outer rings 20 of the taper roller bearings 12, 13 can be fixed at the inner surface of the housing element 2 by common methods. Usually, a press fit is employed. Also, e. g. glueing of the outer ring is possible.

In figures 5 and 6 the guide pin 24 is still in the mounting position. After the pre-assembly is finished the guide pin 24 is pressed out by mounting the final drive pin 18.

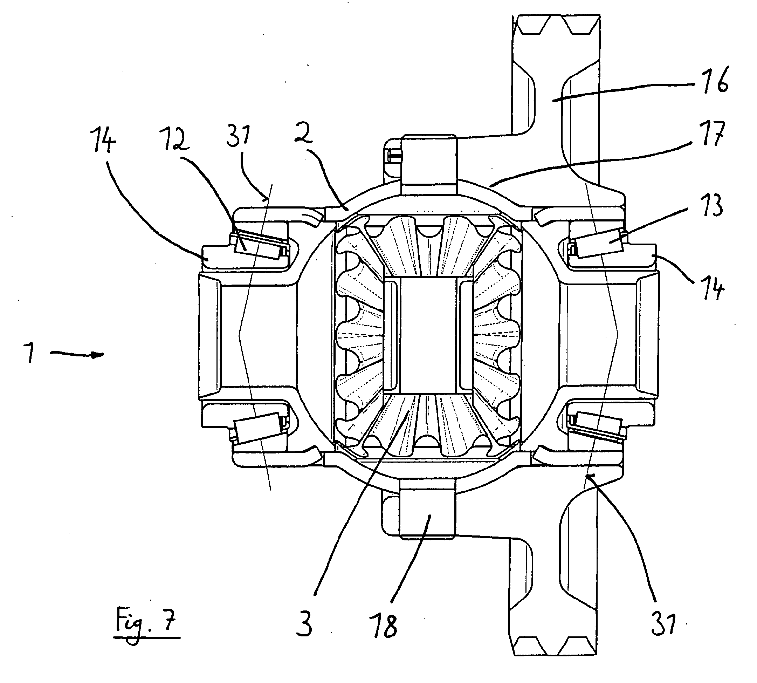

As can be seen in fig. 7 a drive gear 16 is attached to the housing element 2. The one-piece drive gear 16 has a section with a spherical part 17 which is congruent with the spherical shape 6 of the middle region 4 of the housing element 3. After the drive gear 16 is brought into position the drive pin 18 is pushed through the drive gear 16 and the housing element 2 and also through the satellite gears 3', 3'"' of the bevel gear 3.

After the pin 18 is secured axially (means for this are not depicted) the final mounting stage of the differential 1 has been reached.

The drive gear 16 runs parallel with the driven gear (not shown) and can be a helical or a spur gear. Alternatively, a right angle transmission can be applied using a drive bevel crown gear on the housing element 2 cooperating with a mating pinion gear (not shown).

In fig. 7 it is also depicted that the taper roller bearings 12, 13 are arranged in an O-configuration, see load lines 31 in this figure.

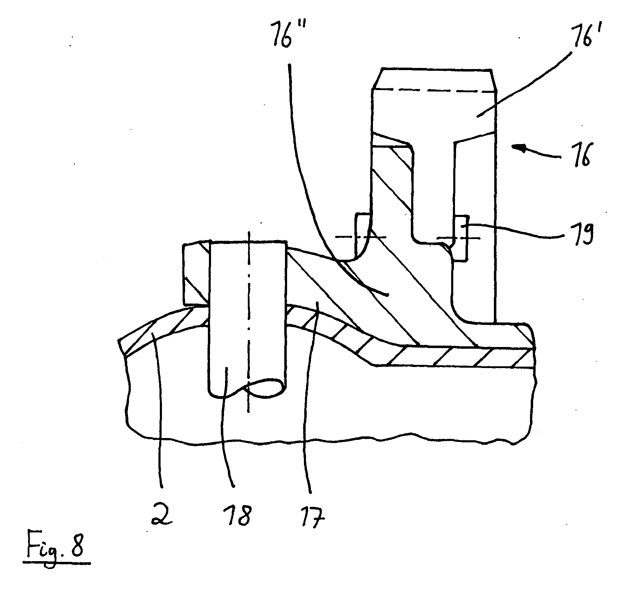

In fig. 8 an alternative design is shown. Here, the drive gear 16 is made in a two-part way with a gear wheel 16' and a hub element 16", which are mechanically connected to another by means of e. g. rivets 19.

In fig. 9 the fully in-line mounted differential module 1 is shown ready for assembly into a vehicle. The carrier structure 14 is a housing element which bears the whole differential 1. The drive flange elements 26 connected with the wheels of the vehicle are shown which are firmly connected to the axial support elements 25. These drive flange elements are mounted after assembly of the differential module in the gearbox carrier or drive axle differential carrier.

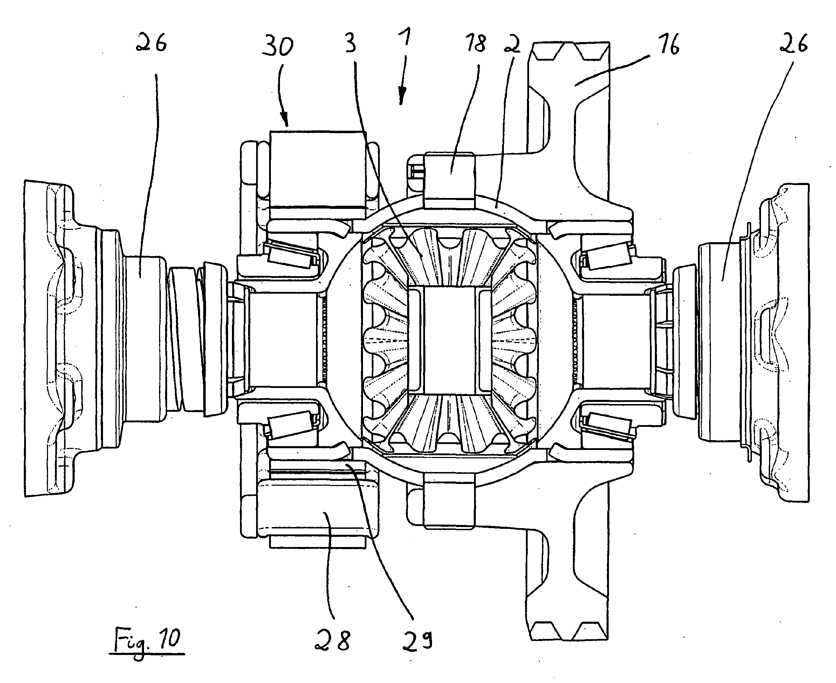

Fig. 10 shows an alternative embodiment of the invention, where the rotating part of an extra power assist device on the housing element is mounted. The power assist device 30 has substantially a stator 28 which is arranged stationary and a rotor 29 which is connected to the rotating housing element 2. Thus, in the embodiment of fig. 10 the power assist device is an electrical/mechanical device. An alternative or additive solution can be a hydraulic/mechanical device.

### Reference Numerals:

- 1: Differential
- 2: Housing element
- 2': Tube section
- 3: Bevel gear (satellite bevel gear / side bevel gear)
- 3': Gear wheel of the bevel gear (satellite gear)
- 3": Gear wheel of the bevel gear (side gear)
- 3"': Gear wheel of the bevel gear (satellite gear)
- 3"": Gear wheel of the bevel gear (side gear)
- 4: Middle region / middle section of the housing element
- 5: Inner surface
- 6: Spherical shape
- 7: Opening
- 8: Opening
- 9: Opening
- 10: Adjacent region
- 11: Indentation
- 12, 13: Bearing arrangement
- 12: Taper roller bearing
- 13: Taper roller bearing
- 14: Carrier structure
- 15: Containing chamber
- 16: Drive gear
- 16': Gear wheel
- 16": Hub element
- 17: Spherical part
- 18: Pin (drive pin)
- 19: Rivet (bolt)
- 20: Outer Ring
- 21: Inner Ring
- 22: Tool Part
- 23: Plain bearing element
- 24: Guide pin
- 25: Axial support element / plain bearing element
- 26: Drive flange element
- 27: Opening
- 28: Stator
- 29: Rotor
- 30: Power assist device
- 31: Load line

- D₀: Diameter
- D_{0T}: Diameter
- D₁: First diameter
- D₂: Second diameter

## Claims

1. Method for producing a differential (1), especially for a vehicle, wherein the differential (1) has a housing element (2), in which a bevel gear (3, 3', 3", 3"', 3"") is mountable inside a middle region (4) of the housing element (2),
**characterized in**
**that** the housing element (2) is produced from a one piece tube section (2') comprising the middle region (4) and an adjacent region (10) on either side of the middle region (4), wherein only the middle region (4) of the tube section (2') is radially widened by plastic deformation.

2. Method according to claim 1, **characterized in that** the plastic deformation process is a hydro-forming process.

3. Method according to claim 1, **characterized in that** the plastic deformation process is a mechanical process.

4. Method according to claim 3, **characterized in that** the mechanical process employs a tool, especially a roller, which is pressed radially against an inner surface (5) of the tube section (2').

5. Method according to at least one of claims 1 till 4, **characterized in that** the deformed middle region (4) is provided with a spherical shape (6) or a cylindrical shape.

6. Method according to at least one of claims 1 till 5, **characterized in that** after or before plastic deformation of the middle region (4) one or two openings (7, 8) are machined, especially punched out, preferably in opposed parts of the radially widened region (4).

7. Method according to at least one of claims 1 till 6, **characterized in that** after or before plastic deformation of the middle region (4) a plurality of openings (9) are machined, especially punched out, in an adjacent region (10) of the radially widened region (4), wherein the openings (9) are uniformly distributed around the circumference of the housing element (2).

8. Method according to at least one of claims 1 till 6, **characterized in that** after or before plastic deformation of the middle region (4) a plurality of indentations or dimples, especially lip shaped dimples, are machined, especially punched out, in an adjacent region (10) of the radially widened region (4), wherein the indentations or dimples are uniformly distributed around the circumference of the housing element (2).

9. Method according to at least one of claims 1 till 8, **characterized in that** an axial fixation of at least one component (3, 3', 3", 3"', 3"") of the differential (1) is carried out by bringing in one or more indentations (11) and/or lip shaped dimples into the outer surface of the housing element (2).

10. Differential (1), especially for a vehicle, which has a housing element (2), wherein bevel gears (3, 3', 3", 3"', 3"") are mounted inside a middle region (4) of the housing element (2), wherein the housing element (2) is supported by a bearing arrangement (12, 13) relatively to a carrier structure (14),
**characterized in**
**that** the housing element (2) consists of a one piece tube section (2') comprising the middle region (4) and an adjacent region (10) on either side of the middle region (4), wherein only the middle region (4) of the tube section (2') is radially widened by plastic deformation, and wherein the widened middle region (4) forms a containing chamber (15) for the bevel gears (3, 3', 3", 3"', 3"").

11. Differential according to claim 10, **characterized in that** the plastic deformation is carried out by hydro-forming or by mechanical forming.

12. Differential according to claim 10 or 11, **characterized in that** the radially widened region (4) of the housing element (2) has a spherical shape (6) or a cylindrical shape.

13. Differential according to at least one of claims 10 till 12, **characterized in that** a drive gear (16) is fixed at the housing element (2).

14. Differential according to claim 12 and 13, **characterized in that** the drive gear (16) has a spherical part (17) which is congruent with the spherical shape (6) of the housing element (2).

15. Differential according to claim 13 or 14, **characterized in that** the drive gear (16) is a helical or spur gear or bevel gear.

## Patentansprüche

1. Verfahren zur Herstellung eines Differentials (1), insbesondere für ein Fahrzeug, wobei das Differential (1) ein Gehäuseelement (2) aufweist, in dem ein Kegelradgetriebe (3, 3', 3", 3"', 3"") innerhalb eines Mittenbereichs (4) des Gehäuseelements (2) montierbar ist,
**dadurch gekennzeichnet, dass**
das Gehäuseelement (2) aus einem einteiligen Rohrabschnitt (2') hergestellt ist, der den Mittenbereich (4) und einen an beiden Seiten des Mittenbereichs (4) angrenzenden Bereich (10) aufweist, wobei nur der Mittenbereich (4) des Rohrabschnitts (2') durch plastische Deformation radial aufgeweitet ist.

2. Verfahren nach Anspruch 1, **dadurch gekennzeichnet, dass** der plastische Deformations-Prozess ein Hydroform-Prozess ist.

3. Verfahren nach Anspruch 1, **dadurch gekennzeichnet, dass** der plastische Deformations-Prozess ein mechanischer Prozess ist.

4. Verfahren nach Anspruch 3, **dadurch gekennzeichnet, dass** bei dem mechanischen Prozess ein Werkzeug eingesetzt wird, insbesondere eine Rolle, die radial gegen eine innere Oberfläche (5) des Rohrabschnitts (2') gepresst wird.

5. Verfahren nach mindestens einem der Ansprüche 1 bis 4, **dadurch gekennzeichnet, dass** der deformierte Mittenbereich (4) mit einer sphärischen Form (6) oder mit einer zylindrischen Form versehen wird.

6. Verfahren nach mindestens einem der Ansprüche 1 bis 5, **dadurch gekennzeichnet, dass** nach oder vor der plastischen Deformation des Mittenbereichs (4) eine oder zwei Öffnungen (7, 8) gefertigt, insbesondere ausgestanzt, werden, vorzugsweise in sich gegenüberliegenden Teilen des radial aufgeweiteten Bereichs (4).

7. Verfahren nach mindestens einem der Ansprüche 1 bis 6, **dadurch gekennzeichnet, dass** nach oder vor der plastischen Deformation des Mittenbereichs (4) eine Vielzahl von Öffnungen (9) in einem an den radial aufgeweiteten Bereich (4) angrenzenden Bereich (10) gefertigt, insbesondere ausgestanzt, werden, wobei die Öffnungen (9) über dem Umfang des Gehäuseelements (2) gleichförmig verteilt sind.

8. Verfahren nach mindestens einem der Ansprüche 1 bis 6, **dadurch gekennzeichnet, dass** nach oder vor der plastischen Deformation des Mittenbereichs (4) eine Vielzahl von Vertiefungen oder Grübchen, insbesondere lippenförmigen Vertiefungen, in einem an den radial aufgeweiteten Bereich (4) angrenzenden Bereich (10) gefertigt, insbesondere ausgestanzt, werden, wobei die Vertiefungen oder Grübchen über dem Umfang des Gehäuseelements (2) gleichförmig verteilt sind.

9. Verfahren nach mindestens einem der Ansprüche 1 bis 8, **dadurch gekennzeichnet, dass** eine axiale Festlegung mindestens einer Komponente (3, 3', 3", 3"', 3"") des Differentials (1) vorgenommen wird durch Einbringung einer oder mehrerer Vertiefungen (11) und/oder lippen-förmiger Grübchen in die äußere Oberfläche des Gehäuseelements (2).

10. Differential (1), insbesondere für ein Fahrzeug, das ein Gehäuseelement (2) aufweist, in dem Kegelräder (3, 3', 3", 3"', 3"") innerhalb eines Mittenbereichs (4) des Gehäuseelements (2) montiert sind, wobei das Gehäuseelement (2) durch eine Lageranordnung (12, 13) relativ zu einer Trägerstruktur (14) gelagert ist,
**dadurch gekennzeichnet, dass**
das Gehäuseelement (2) aus einem einteiligen Rohrabschnitt (2') besteht, der den Mittenbereich (4) und einen an beiden Seiten des Mittenbereichs (4) angrenzenden Bereich (10) aufweist, wobei nur der Mittenbereich (4) des Rohrabschnitts (2') durch plastische Deformation radial aufgeweitet ist und wobei der aufgeweitete Mittenbereich (4) eine Aufnahmekammer (15) für die Kegelräder (3, 3'", 3"") bildet.

11. Differential nach Anspruch 10, **dadurch gekennzeichnet, dass** die plastische Deformation durch einen Hydroform-Prozess oder durch einen mechanischen Prozess ausgeführt ist.

12. Differential nach Anspruch 10 oder 11, **dadurch gekennzeichnet, dass** der radial aufgeweitete Mittenbereich (4) des Gehäuseelements (2) eine sphärische Form (6) oder eine zylindrische Form hat.

13. Differential nach mindestens einem der Ansprüche 10 bis 12, **dadurch gekennzeichnet, dass** ein Antriebszahnrad (16) an dem Gehäuseelement (2) befestigt ist.

14. Differential nach Anspruch 12 und 13, **dadurch gekennzeichnet, dass** das Antriebszahnrad (16) einen sphärischen Teil (17) aufweist, der kongruent mit der sphärischen Form (6) des Gehäuseelements (2) ist.

15. Differential nach Anspruch 13 oder 14, **dadurch gekennzeichnet, dass** das Antriebszahnrad (16) ein Schrägstirnrad oder Geradstirnrad oder Kegelrad ist.

## Revendications

1. Procédé pour produire un différentiel (1), en particulier pour un véhicule, dans lequel le différentiel (1) comprend un élément de boîtier (2), dans lequel un engrenage conique (3, 3', 3", 3", 3'''') peut être monté à l'intérieur d'une région centrale (4) de l'élément de boîtier (2), **caractérisé en ce que** l'élément de boîtier (2) est produit à partir d'une section de tube d'une seule pièce (2') qui comprend la région centrale (4) et une région adjacente (10) de part et d'autre de la région centrale (4), dans lequel seule la région centrale (4) de la section de tube (2') est radialement élargie par une déformation plastique.

2. Procédé selon la revendication 1, **caractérisé en ce que** le procédé de déformation plastique est un procédé d'hydroformage.

3. Procédé selon la revendication 1, **caractérisé en ce que** le procédé de déformation plastique est un procédé mécanique.

4. Procédé selon la revendication 3, **caractérisé en ce que** le procédé mécanique emploie un outil, en particulier un galet, qui est pressé radialement contre une surface intérieure (5) de la section de tube (2').

5. Procédé selon au moins une des revendications 1 à 4, **caractérisé en ce que** la région centrale déformée (4) est dotée d'une forme sphérique (6) ou d'une forme cylindrique.

6. Procédé selon au moins une des revendications 1 à 5, **caractérisé en ce que**, après ou avant la déformation plastique de la région centrale (4), une ou deux ouvertures (7, 8) est (sont) usinée(s), en particulier poinçonnée(s), de préférence dans des parties opposées de la région radialement élargie (4).

7. Procédé selon au moins une des revendications 1 à 6, **caractérisé en ce que**, après ou avant la déformation plastique de la région centrale (4), une pluralité d'ouvertures (9) sont usinées, en particulier poinçonnées, dans une région adjacente (10) de la région radialement élargie (4), dans lequel les ouvertures (9) sont distribuées de façon uniforme autour de la circonférence de l'élément de boîtier (2).

8. Procédé selon au moins une des revendications 1 à 6, **caractérisé en ce que**, après ou avant la déformation plastique de la région centrale (4), une pluralité d'indentations ou de dépressions, en particulier de dépressions en forme de lèvre, sont usinées, en particulier poinçonnées, dans une région adjacente (10) de la région radialement élargie (4), dans lequel les indentations ou les dépressions sont distribuées de façon uniforme autour de la circonférence de l'élément de boîtier (2).

9. Procédé selon au moins une des revendications 1 à 8, **caractérisé en ce qu'**une fixation axiale d'au moins un composant (3, 3' , 3" , 3"', 3'''') du différentiel (1) est exécutée en amenant une ou plusieurs indentation(s) (11) et/ou dépressions en forme de lèvre dans la surface extérieure de l'élément de boîtier (2).

10. Différentiel (1), en particulier pour un véhicule, comprenant un élément de boîtier (2), dans lequel des engrenages coniques (3, 3', 3", 3''', 3"") sont montés à l'intérieur d'une région centrale (4) de l'élément de boîtier (2), dans lequel l'élément de boîtier (2) est supporté par un agencement de palier (12, 13) par rapport à une structure de support (14), **caractérisé en ce que** l'élément de boîtier (2) est constitué d'une section de tube d'une seule pièce (2') qui comprend la région centrale (4) et une région adjacente (10) de part et d'autre de la région centrale (4), dans lequel seule la région centrale (4) de la section de tube (2') est radialement élargie par une déformation plastique, et dans lequel la région centrale élargie (4) forme une chambre de logement (15) pour les engrenages coniques (3, 3', 3'', 3"', 3"").

11. Différentiel selon la revendication 10,
**caractérisé en ce que** la déformation plastique est exécutée par hydroformage ou par formage mécanique.

12. Différentiel selon la revendication 10 ou 11, **caractérisé en ce que** la région radialement élargie (4) de l'élément de boîtier (2) présente une forme sphérique (6) ou une forme cylindrique.

13. Différentiel selon au moins une des revendications 10 à 12, **caractérisé en ce qu'**un engrenage d'entraînement (16) est fixé à l'élément de boîtier (2).

14. Différentiel selon les revendications 12 et 13, **caractérisé en ce que** l'engrenage d'entraînement (16) comprend une partie sphérique (17) qui est congruente avec la forme sphérique (6) de l'élément de boîtier (2).

15. Différentiel selon la revendication 13 ou 14, **caractérisé en ce que** l'engrenage d'entraînement (16) est un engrenage hélicoïdal ou cylindrique ou un engrenage conique.
